# EUROPEAN PATENT SPECIFICATION

(11) **EP 1 770 977 B1**
(45) Date of publication and mention of the grant of the patent: **26.11.2008**
(21) Application number: 06121154.6
(22) Date of filing: 22.09.2006
(51) Int. Cl.: H04N 1/44

(54) **Image processing apparatus, control method therefor, computer program, and computer-readable storage medium for encrypting data.**
Bildverarbeitungsvorrichtung,- verfahren, -programm und -speichermedium zur Datenverschlüsselung.
Dispositif, méthode, programme et support de stockage de traitement d'image permettant de crypter des données.

(30) Priority: 28.09.2005 JP 2005282332
(43) Date of publication of application: 04.04.2007
(73) Proprietor: Canon Kabushiki Kaisha, Ohta-Ku, Tokyo 146-8501 (JP)
(72) Inventor: Utsumi, Keiko, Ohta-ku Tokyo (JP); Hamada, Noboru, Ohta-ku Tokyo (JP)
(74) Representative: Sharp, Alan Cooper

(56) References cited:
- US-A- 6 094 483
- US-A1- 2004 199 778
- US-A1- 2005 002 053

## Description

### BACKGROUND OF THE INVENTION

### Field of the Invention

The present invention relates to image processing and, more particularly, to a technique of encrypting image data.

### Description of the Related Art

Recently, image copying devices such as digital color multi-function peripheral devices have been in widespread use. However, problems can arise in terms of the duplication of special originals such as confidential documents. Therefore, there is an urgent need to take some countermeasures against the acts of unauthorized duplication of confidential documents and the like.

A special original on which confidential information is written is required to allow only a particular person to check the confidential information and at the same time to inhibit persons other the person concerned from obtaining the confidential information.

Various techniques have been proposed to impose restrictions on the duplication of special originals such as confidential documents. The following are examples of such techniques.

According to a first technique, a copy-forgery-inhibited pattern corresponding to a confidential original is registered in advance, and it is determined whether the copy-forgery-inhibited pattern of a read image matches any of the registered original patterns. If it is determined that one of the registered patterns matches the read image, an identification code is assigned to the read image. This makes it easy to acquire a copy-forgery-inhibited pattern embedded in a confidential original, determine whether a read image matches a confidential original, and track the act of duplication (for example, US Patent No. 6901236 to be referred to as reference 1 hereinafter).

There is known another technique of discriminating an item of confidential information among input original electronic data (XML or the like) and printing the confidential information upon converting it into a protected form (a substitute expression such as a barcode or watermark image) (Japanese Patent Laid-Open No. 2004-058410 to be referred to as reference 2 hereinafter). In addition, when such printed matter is read, the read data is compared with a password input from a user. If they match each other, data containing the confidential information is displayed.

The technique disclosed in reference 1 allows acquisition of a copy-forgery-inhibited pattern embedded in a confidential original, determining whether a read image is a confidential original, and tracking the act of duplication.

According to this technique, however, the copy-forgery-inhibited pattern of a confidential original must be registered in advance. In addition, although the act of duplication can be tracked, since an original is properly duplicated, the duplicate cannot be tracked.

In addition, as described above, according to reference 2, only a specified person (person who knows a password) can browse confidential information. However, according to patent reference 2, data input first is electronic text data such as XML data, and the original input first is not assumed to be input in the form of image data on paper or the like.

The above problem can be easily understood by being applied to a system such as a bank in which transactions are made on a paper basis. However, no consideration is given to the case where a sheet of paper on which confidential information is seen stealthily.

### SUMMARY OF THE INVENTION

It is, therefore, an object of the present invention to provide a technique of inputting an original document on which confidential information is written, and outputting an image in a form which allows only a specific person or terminal to read the written contents.

In order to mitigate such problems, an image processing apparatus of the present invention comprises the following arrangement.

According to a first aspect of the present invention, there is provided an image processing apparatus as specified in claims 1 to 7.

According to a second aspect of the present invention, there is provided a control method as specified in claim 8.

According to further aspects of the present invention there is provided a computer program and computer-readable storage medium as specified in claims 9 and 10.

Further features of the present invention will become apparent from the following description of exemplary embodiments with reference to the attached drawings.

### BRIEF DESCRIPTION OF THE DRAWINGS

The accompanying drawings, which are incorporated in and constitute a part of the specification, illustrate embodiments of the invention and, together with the description, serve to explain the principles of the invention.

Fig. 1 is a schematic view showing the arrangement of a system and an outline of processing in an embodiment;

Fig. 2 is a block diagram showing the arrangement of a multi-function peripheral device;

Fig. 3 is a flowchart showing main processing in the multi-function peripheral device;

Fig. 4 is a view showing an example of an original image;

Fig. 5 is a view showing a background copy-forgery-inhibited pattern and the result obtained by decoding the pattern;

Fig. 6 is an enlarged view of part of decoded data of Fig. 5;

Fig. 7 is a view showing an area specified by area data exemplified by the data in Fig. 6;

Fig. 8 is a flowchart showing the details of meta data extraction processing;

Fig. 9 is a flowchart showing the details of encryption processing;

Fig. 10 is a schematic view showing the flow of decryption processing;

Fig. 11 is a view showing a background copy-forgery-inhibited pattern and an example of the result obtained by decoding the pattern in the third embodiment;

Fig. 12 is a schematic view showing the memory map of a CD-ROM as a storage medium;

Fig. 13 is a view showing an example of a meta data table generated in the embodiment; and

Fig. 14 is a flowchart showing a processing sequence of a decryption processing application in the embodiment.

### DESCRIPTION OF THE EMBODIMENTS

An embodiment of the present invention will be described in detail below with reference to the accompanying drawings.

### <First Embodiment>

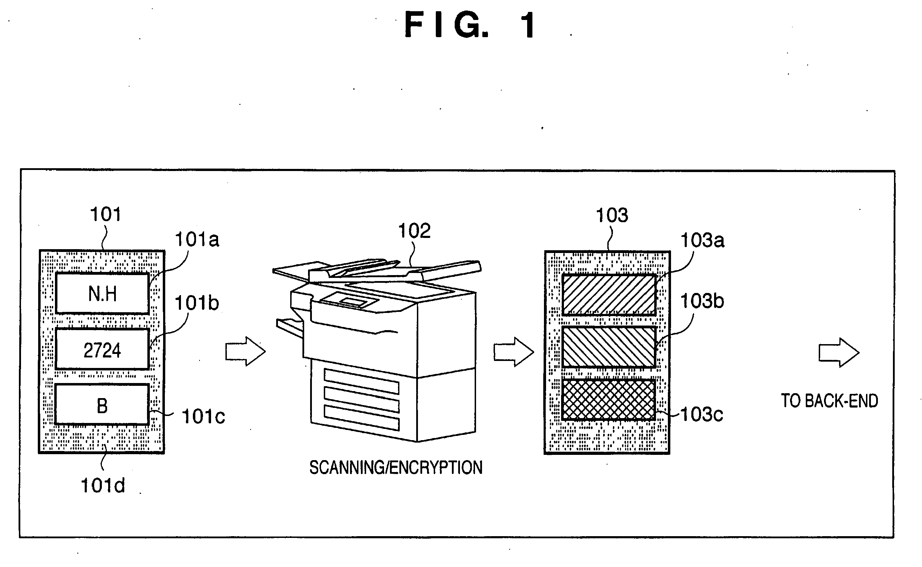

An overview of processing in the embodiment will be described first with reference to Fig. 1.

Referring to Fig. 1, reference numeral 102 denotes a multi-function peripheral device (to be also referred to as an MFP hereinafter) including an original reading function. Although the embodiment exemplifies the multi-function peripheral device, the present invention can be applied to an arrangement which reads an original and an apparatus or system which includes the following function implementation means, and hence is not necessarily limited to a multi-function peripheral device. For example, this embodiment may comprise an information processing apparatus (e.g., a personal computer) including an image scanner and an application program to be executed on the apparatus.

In this embodiment, for the sake of descriptive convenience, assume that an original 101 to be processed is an application form for opening an account in a bank or the like. Assume also that the original 101 has item fields 101a, 101b, and 101c to be encrypted, and pieces of information to be encrypted are written in advance in these fields by handwriting, printing, or the like. In addition, assume that meta data associated with the above item fields is embedded in advance as a copy-forgery-inhibited pattern in a background 101d (i.e., meta data is encoded into a copy-forgery-inhibited pattern by using a predetermined method and is printed in advance). Assume that this embedding operation is performed by a digital watermark technique.

The multi-function peripheral device (MFP) 102 reads the original 101 described above, and extracts the meta data information embedded in the background 101d from the read image (the copy-forgery-inhibited pattern in the background is decoded to acquire the meta data). The item fields 101a, 101b, and 101c are specified by using the meta data, and the image in each item field is encrypted. The pieces of encrypted information are embedded as images in fields 103a, 103b, and 103c to generate an output image 103.

The overall operation of this embodiment has been schematically described above. A specific method of the embodiment will be described in detail below with reference to the accompanying drawings.

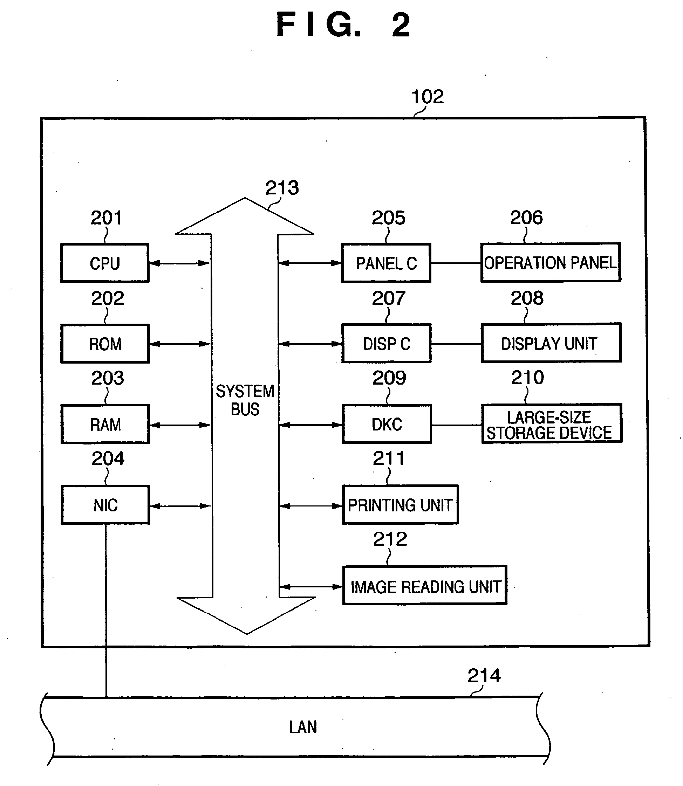

Fig. 2 is a block diagram showing the arrangement of the multi-function peripheral device 102 according to the embodiment.

The multi-function peripheral device 102 comprises a CPU 201 which executes a software program stored in a ROM 202 or a large-size storage device 210 such as a hard disk. The CPU 201 systematically controls each device connected to a system bus 213 by executing the program.

Reference numeral 203 denotes a RAM which functions as the main memory of the CPU 201, a work area, and the like; 205, an external input controller (PANELC) which controls instruction inputting from an operation panel 206 comprising various kinds of buttons provided for a copying machine or a touch panel; and 207, a display controller (DISPC) which controls the display operation of a display unit 208 comprising, for example, a liquid crystal display or the like.

Reference numeral 204 denotes a network interface card (NIC) which bidirectionally exchanges data with another network device, a file server, or the like through a LAN 214.

Reference numeral 211 denotes a printing unit which is realized by, for example, electrophotography or an inkjet system and prints on a sheet.

Reference numeral 212 denotes an image reading unit for reading an image printed on a sheet, for example. In many cases, the image reading unit 212 is equipped with an auto document feeder (not shown) as an option, and can automatically read a plurality of originals.

Note that the large-size storage device 210 is also used as a temporary storage area for images in some cases.

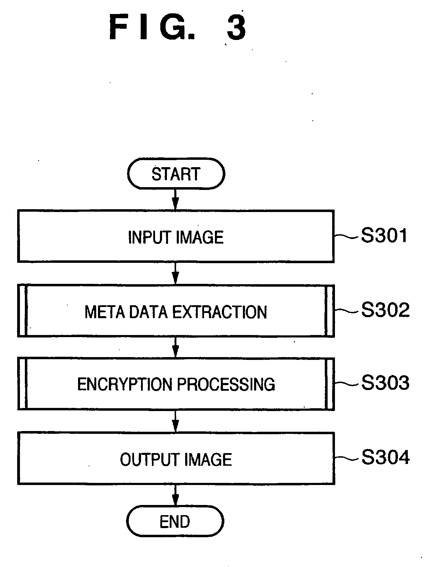

Fig. 3 is a flowchart showing the flow of encryption processing by the multi-function peripheral device 102 in this embodiment. In the following description, control and determination steps are performed by causing the CPU 201 to execute programs stored in the ROM 202 or large-size storage device 210.

The sequence shown in Fig. 3 is started when a start instruction is input for encryption processing of an original image by operating the operation panel 206 comprising a touch panel or switches and the like. Note that general copying processing is assumed to be based on a known sequence and its description will be omitted.

In the encryption processing, first of all, in step S301, the image reading unit 212 is controlled to convert an original image into an electrical signal and store the resultant information in the RAM 203.

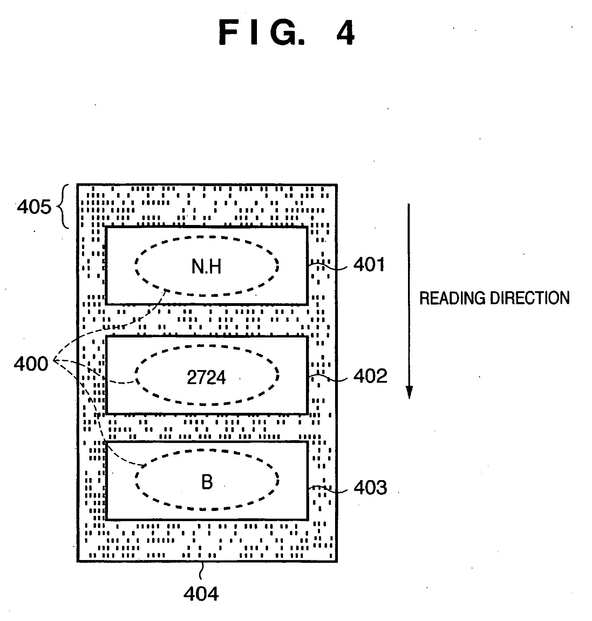

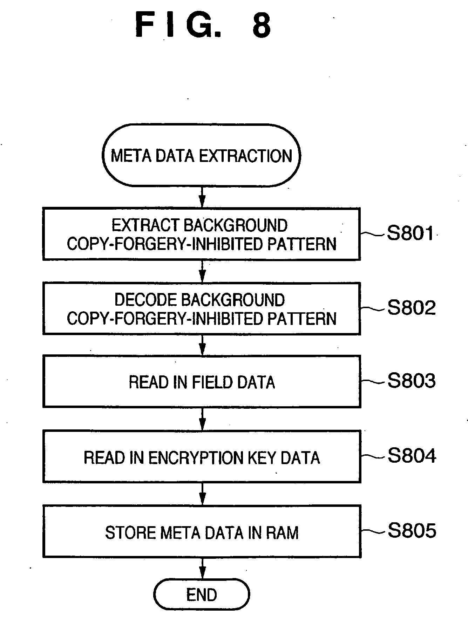

In step S302, meta data such as coordinate position data and the like associated with the item fields 101a, 101b, and 101c shown in Fig. 1 are extracted from the original image information stored in the RAM 203 in step S301. In this case, meta data means information indicating the attributes of item fields, the positions of the item fields, and processing contents. Meta data in this embodiment comprises area data indicating the positions and sizes of item fields on an image, encryption key data which designates a public key used for the encryption of image data entered in the item fields, and the like. The details of the constituent elements of meta data will be described with reference to Figs. 4 to 7. The details of a meta data extraction method will be described with reference to the flowchart of Fig. 8.

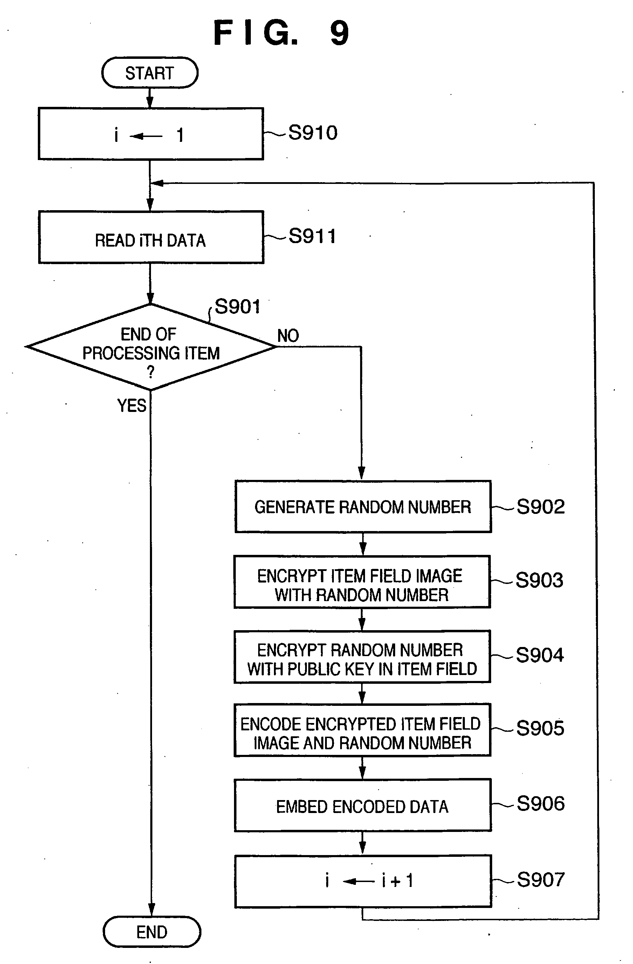

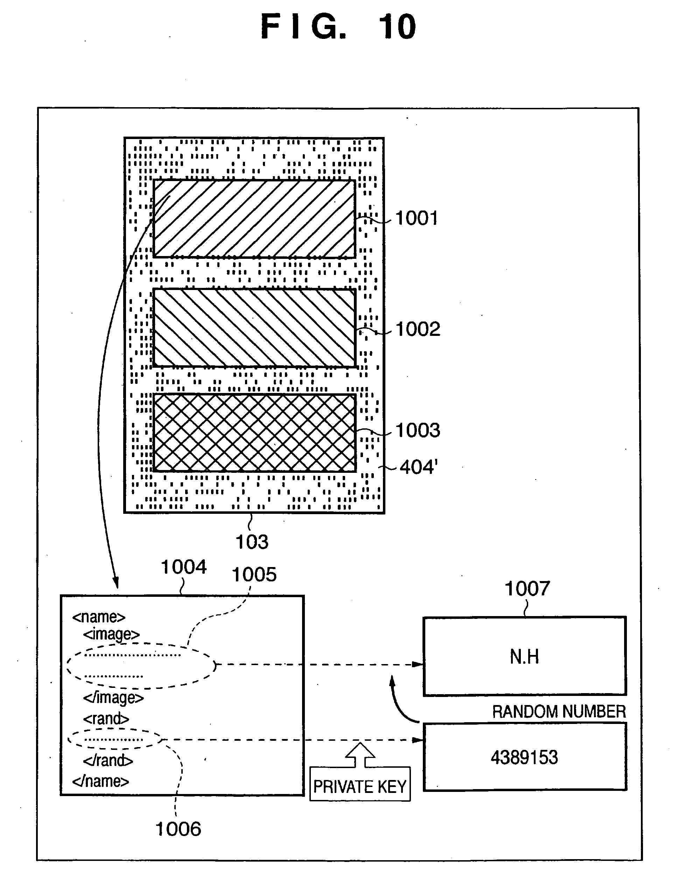

Step S303 following the above step is the step of performing encryption processing. In this step, the image data in the respective item fields is encrypted by using public keys set for the respective item fields identified in the meta data extracted in step S302. The pieces of encrypted information are encoded into images to be stored in the item fields 103a, 103b, and 103c shown in Fig. 1. These generated images are stored in the RAM 203 such that they are overwritten on the areas of the respective fields of the original image read in step S301. An encryption processing method will be described in detail again with reference to the flowchart of Fig. 9. The generated image will be described in detail again with reference to Fig. 10.

Lastly, in step S304, the image encrypted in step S303 is printed out on a sheet by the printing unit 211 of the multi-function peripheral device (MFP).

The constituent elements of meta data and a meta data extraction method in step S302 will be described next with reference to Figs. 4 to 8.

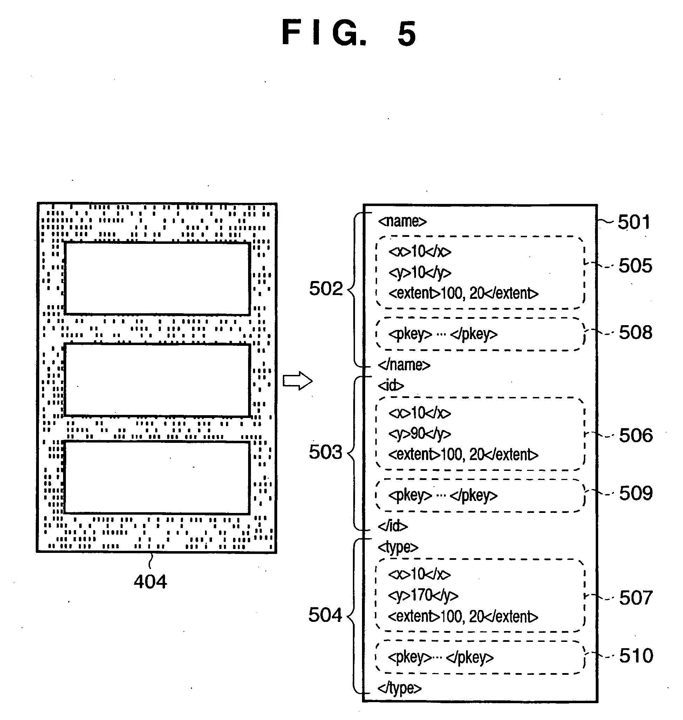

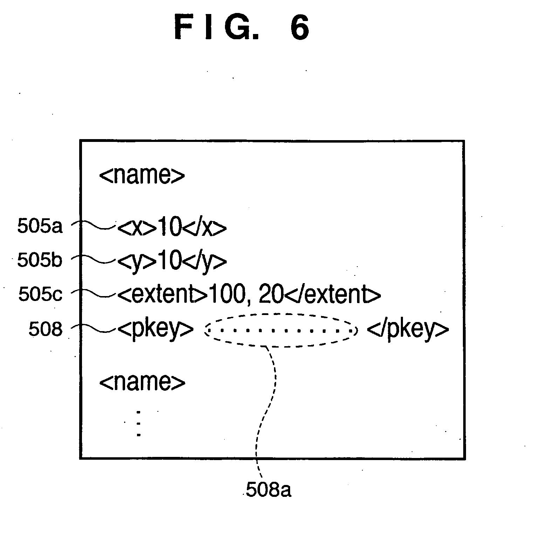

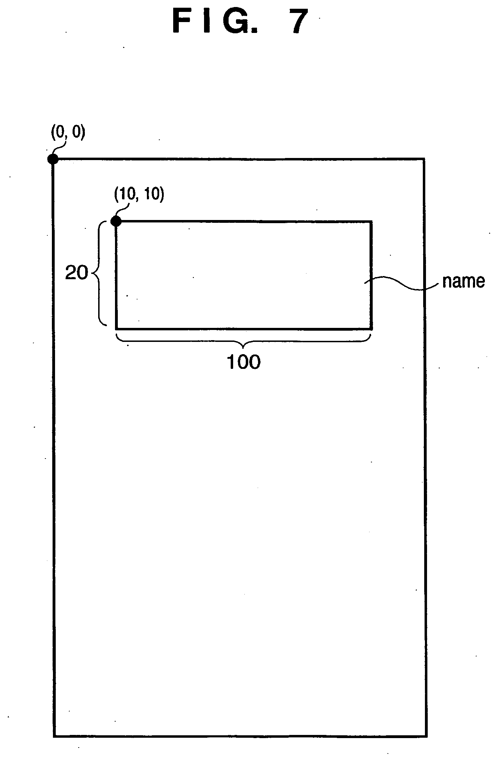

Fig. 4 is a view showing the image data of the read original 101 stored in the RAM 203. Fig. 5 is a view showing a copy-forgery-inhibited pattern (background pattern) in image data and embedded information obtained by decoding the copy-forgery-inhibited pattern. Fig. 6 is a schematic enlarged view of part of the decoded data shown in Fig. 5. Fig. 7 is a schematic view showing the area of position data exemplified by the data in Fig. 6. Fig. 8 is a flowchart showing the details of the flow of meta data extraction processing (step S302) in Fig. 3.

The image data stored in the RAM 203 contains item fields 401, 402, and 403 written by handwriting, printing, or the like. Assume that in this case, the respective item fields are provided as name 401, id 402, and type 403 from above. In background copy-forgery-inhibited pattern 404, meta data corresponding to the respective item fields (name 401, id 402, and type 403) are embedded by using a digital watermark technique. There are many kinds of digital watermark techniques, and any one of them can be used. A detailed description of the method to be used will be omitted.

In this embodiment, as described above, the meta data contains at least area information of each item field on an original, and public key information for encryption. The background copy-forgery-inhibited pattern 404 may be recorded in a visible form or an invisible form. That is, it suffices if the multi-function peripheral device in this embodiment can extract information embedded by a digital watermark technique.

A sequence for extracting meta data will be described in detail below with reference to the flowchart of Fig. 8.

In step S801, the background copy-forgery-inhibited pattern 404 is extracted from the image data stored in the RAM 203.

In the background copy-forgery-inhibited pattern 404, area data 505, 506, and 507 and encryption key data 508, 509, and 510 which are meta data are embedded by using the digital watermark technique. Area data is information which defines an image area subjected to encryption processing. Encryption key data uses a public key to encrypt the image area defined by area data.

In step S802, the extracted background copy-forgery-inhibited pattern 404 is decoded to obtain (extract) data 501. In this embodiment, the data 501 is written in accordance with the XML description method. Obviously, however, any description method other than the XML description method can be used as long as meta data used in this case can be described.

The item fields (name 401, id 402, and type 403) shown in Fig. 4 of the data 501 are described by the XML description method. That is, the data 501 comprises data 502 of the item field "name", data 503 of the item field "id", and data 504 of the item field "type". The area data 505, 506, and 507 and the encryption key data 508, 509, and 510 are designated one by one for each item field.

Fig. 6 shows the XML description of the data 502 of the item field "name", in particular. The area data 505 defining the image area of the item field "name" has x-coordinate data 505a of the upper left corner of the field area regarded as a rectangular area, y-coordinate data 505b of the upper left apex, and area width/height data 505c (the unit of coordinates is a pixel). In this case, the origin of the coordinate system is the position of the upper left corner of the image, the horizontal rightward direction is the positive direction of the x-coordinates, and the vertical downward direction is the positive direction of the y-coordinates. The area width/height data 505c indicates the length of the side of the rectangular area in the x-axis direction and the length of the side of the rectangular area in the y-axis direction. In the case shown in Fig. 6, when the image area of the item field "name" is regarded as a rectangular area, the coordinates of the upper left corner of the rectangular area, the length of each horizontal side, and the length of each vertical side are respectively defined as (10, 10), "100", and "20". In addition, Fig. 6 shows that the coordinates of the upper left corner of the image area of the item field "id" are (10, 90), the length (width) of each horizontal side is "100", and the length (height) of each vertical side is "20". Although the description is out of sequence, when an instruction to start encryption processing for an original image is input in the multi-function peripheral device according to this embodiment, the image reading unit 212 reads the image at a predetermined resolution. In other words, the original 101 in this embodiment is based on the assumption that reading is performed at this resolution.

When the flow advances to step S803, the area data of each item field is read in, and the numerical characters are converted into numerical data (binary data). In step S804, encryption key data corresponding to each item field is read in to obtain a public key for encrypting each item field.

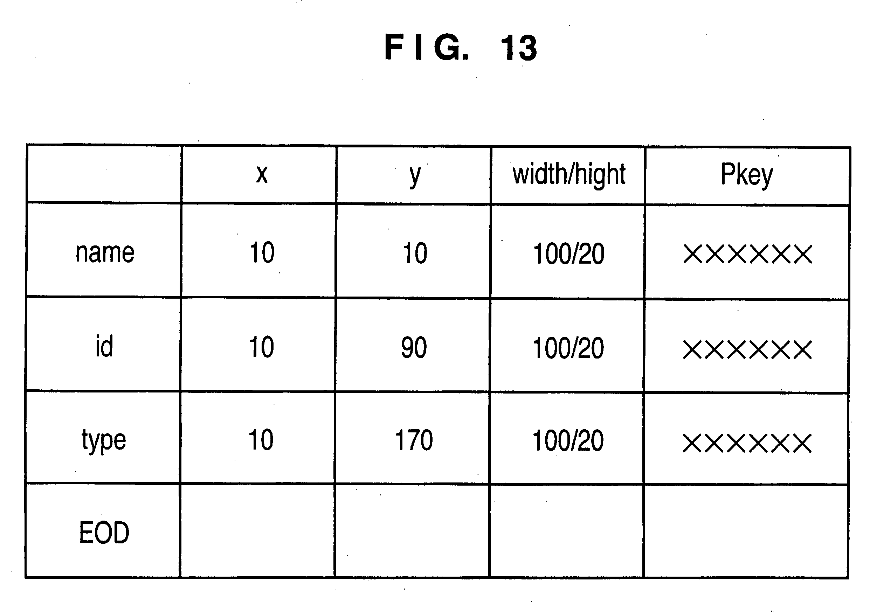

In step S805, the read-in data is stored in the RAM 203 as a meta data table in a form suitable for encryption processing. Fig. 13 shows an example of the meta data table generated in the above manner. Referring to Fig. 13, since there are three item fields, EOD (End of Data) indicates that there is no subsequent data stored in the fourth field. In addition, coordinates, a width, and a height are used for computation, and hence are stored as numerical values instead of numeric characters.

Although the description is out of sequence, when meta data is to be extracted from a copy-forgery-inhibited pattern in an original image, as is obvious, it is necessary to discriminate a portion in which meta data is embedded and other portions (item fields). For this reason, meta data extraction processing is sequentially performed from the upper side of the image, and the number of item fields and their area data are embedded in a portion 405 located above the item field "name". This makes it possible to discriminate the number of item fields existing in the image and the positions and sizes of the areas before the flow of processing advances to the item field "name". Therefore, meta data can be extracted from the portion other than the item fields. In addition to this technique, several techniques for the discrimination between a copy-forgery-inhibited pattern area and item fields are conceivable. Assume that information is embedded by a digital watermark technique using the distance between black points having a predetermined size. In this case, if the size of the black point is equal to or less than a predetermined size, and no next black point exists in a predetermined allowable range, it may be determined that the corresponding portion is outside the portion in which the meta data is embedded.

The encryption processing in step S303 will be described next. Fig. 9 is a flowchart showing the details of step S303. Fig. 10 is a view showing an example of the image 103 created by the encryption processing.

When information is to be encrypted with a public key, complicated computation is necessary, and a long period of time is required. That is, the method of directly encrypting an image (a handwritten or printed character image) in an each item field with a public key is not efficient. This embodiment therefore uses a hybrid scheme of generating a random number, encrypting an image in each item field with the random number, and encrypting the random number used for the encryption with a public key. Since a random number is a target for encryption with a public key, encryption can be performed in a small information amount in a short period of time. This is a reason why such a scheme is used. Encryption based on such an idea will be described with reference to the flowchart of Fig. 9.

In step S910, "1" is assigned as an initial value to a variable i. In step S911, the ith data of the meta data table (when i = 1, the first row in Fig. 13) is read in.

It is checked in step S901 whether the read-in data is information (EOD) indicating the end of the item. If NO in step S901, the flow advances to step S902 to generate a random number with a predetermined number of digits for the read-in item field. The flow then advances to step S903 to cut image data in the item field stored in the RAM 203 in accordance with the read-in area data and encrypt the cut image data by using the generated random number. In this encryption processing, the generated random number is used as a common key to give priority to the speed of the processing.

That is, if image data cut from given image data stored in the RAM 203 in accordance with area data and a generated random number are respectively represented by an image I and Rand, the encrypted image data generates Encrypt Rand(I). In this case, the cut image data may be temporarily compressed/encoded, and then encrypted. If compression encoding processing is defined as Enc, it suffices to obtain Encrypt Rand (Enc(I)).

The flow then advances to step S904 to encrypt the generated random number Rand with a public key Pk in the item field "name". That is, the data Encrypt Pk(Rand) is obtained.

In step S905, the data Encrypt Rand(I) of the encrypted image and the data Encrypt Pk(Rand) of the encrypted random number are encoded together into digital watermark data. That is, encoded data Encode (Encrypt Rand(Image) + Encrypt Pk(Rand)) is generated.

In step S906, the encoded data "Encode (Encrypt Rand(Image) + Encrypt Pk(Rand))" is overwritten as image data on the area cut in step S903. As a consequence, the read image data is updated by the encrypted information. A digital watermark technique to be used in this case is preferably different from a digital watermark technique used for a copy-forgery-inhibited pattern to allow discrimination between the resultant data.

In step S907, thereafter, the variable i is increased by "1" to make setting for reading in meta data associated with the next item field. The flow then returns to step S911.

The above processing is repeated until all the item fields are processed. As a result, the handwritten/printed character image in the image data in the RAM 203 is replaced with the image data "Encode (Encrypt (Encrypt Rand(Image) + Encrypt Pk(Rand))" obtained by the above encryption processing. In step S304 in Fig. 3, the output 103 shown in Fig. 1 can be obtained by printing out the image generated in this manner.

Decryption processing will be simply described next. This decryption processing is performed by a terminal which reads the printed matter 103 printed in the above manner as an original. Since a PC to which a scanner is connected can comprise the terminal, decryption processing can be implemented by an application executed in the PC. The hardware arrangement of the PC is not specifically limited, and hence no specific reference will be made to the hardware arrangement. The following is a processing sequence of an application executed by the CPU in the PC.

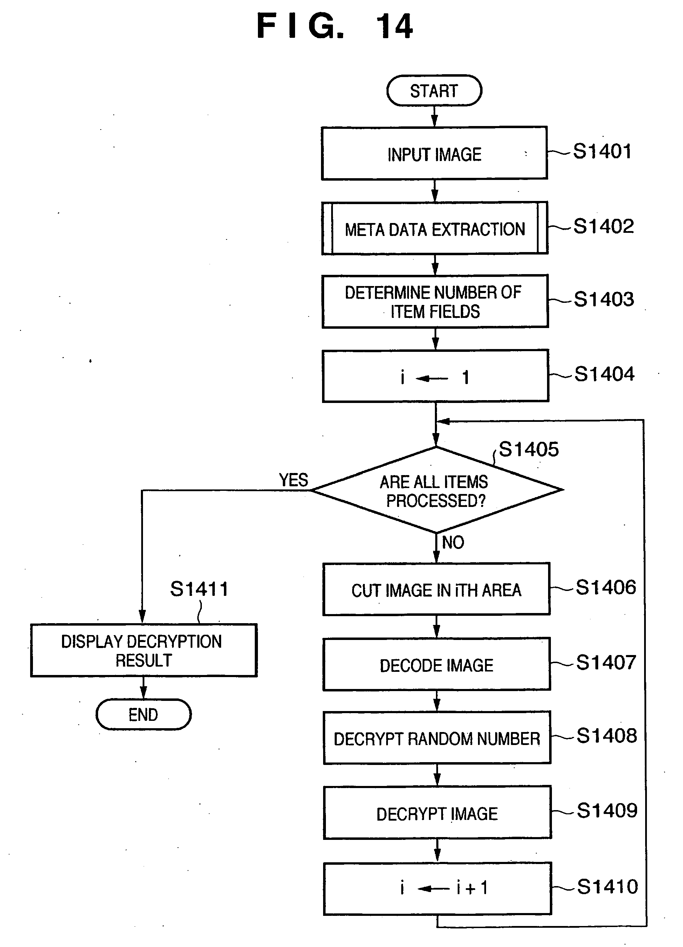

Fig. 10 is a schematic view showing an outline of decryption processing. Fig. 14 is a flowchart showing a processing sequence of an application for decryption processing.

First of all, in step S1401, the original 103 is read. In step S1402, information embedded in a copy-forgery-inhibited pattern 404' is extracted to generate a meta data table. Since the processing in steps S1401 and S1402 is substantially the same as that in steps S301 and S302 in the multi-function peripheral device 102, a description thereof will be omitted. Note that the read image is stored in the RAM of the PC.

In step S1403, it is determined, by referring to the meta data table extracted/generated in step S1402, how many item fields are contained. In step S1404, "1" is assigned as an initial value to the variable i.

In step S1405, it is determined whether processing for all the item fields is complete. This determination may be performed by comparing the value of the variable i with the number fields determined in step S1403.

If it is determined in step S1405 that the decryption processing for all the item fields is not complete, the flow advances to step S1406. In this case, in accordance with the ith area data in the meta data table (see Fig. 13), the image data of the corresponding area in the read-in image is cut. In step S1407, the cut image data is decoded to obtain data 1004 (see Fig. 10).

In step S1408, private key information (corresponding to a public key in the meta data table) is read out from the HDD of the PC, and is used as a decryption key to decrypt the data (encrypted random number) between tags <rand> and </rand>. In the case shown in Fig. 10, this processing is equivalent to the processing of obtaining the random number "4389153".

The flow then advances to step S1409 to use the decrypted random number as a common key to decrypt the data (the image data encrypted with the random number) between tags <image> and </image>. As a result, since the handwritten/printed character image written in the corresponding item field can be decrypted, the image is overwritten on the corresponding item field of the image data in the RAM. In the case shown in Fig. 10, this processing is equivalent to the processing of obtaining a character image 1007 originally written in the item field "name".

The flow then advances to step S1410 to increase the variable i by "1", and the processing in step S1405 and subsequent steps is repeated.

When decryption processing for all the item fields is completed by repeating the above processing, the decrypted image data with respect to all the item fields are generated in the RAM. The image data are therefore displayed on the display device of the PC (step S1411), and a series of decryption processing is terminated.

As described above, according to this embodiment, simply setting a predetermined sheet on which information has already been written in the multi-function peripheral device and inputting an instruction to start encryption processing make it possible to prevent the leakage of the written information from the printed matter to a third party and generate printed matter with high confidentiality. The embodiment has exemplified the case wherein three item fields are set. However, the number of item fields is not limited to this. If N items exist, all the items need not be encrypted. If M (M < N) fields exist, meta data for encrypting the M fields may be embedded in a copy-forgery-inhibited pattern.

As an example of an application of the above embodiment, the following system is proposed. A multi-function peripheral device (or an equivalent PC system) is installed in a company or the like. Necessary information is written on a sheet designated by the bank or the like. An instruction to start encryption processing in the multi-function peripheral device, and copying operation is executed. The sheet output as a copying result is submitted to the bank. A terminal in the bank scans the original to decode the information. This arrangement can prevent the disclosure of information to an unauthorized party when the sheet is conveyed from the company to the bank.

Although the above embodiment has been exemplified by a sheet for opening an account in a bank or the like. The present invention is not limited to this, and may be applied to anything. If there are many kinds of sheets to be used, a form ID for identifying the kind of sheet may be embedded in a copy-forgery-inhibited pattern. On the side where an encrypted sheet is scanned to be decrypted, processes to be performed afterward may be switched in accordance with this form ID.

In the embodiment, an original as an encryption target has been described as an original on which information is embedded in a background (copy-forgery-inhibited pattern). However, a two-dimensional barcode or the like may be used even through the amount of information which can be embedded decreases.

### <Second Embodiment>

The above embodiment (first embodiment) has exemplified the case wherein information is printed by the printing unit 211 in image output step S304 in Fig. 3. However, the embodiment can be modified such that the information may be transmitted to the outside through a network interface card 204. In this case, since high confidentiality is maintained for the information to be transmitted as described above, any further encryption technique is not required. Using such a transmission form makes it possible to directly transmit an encrypted image as electronic data to a back-end system (not shown).

### <Third Embodiment>

In the above embodiment, encryption key data is designed such that public key information itself is directly embedded as a copy-forgery-inhibited pattern. However, information indicating public key information may be embedded instead of public key information itself.

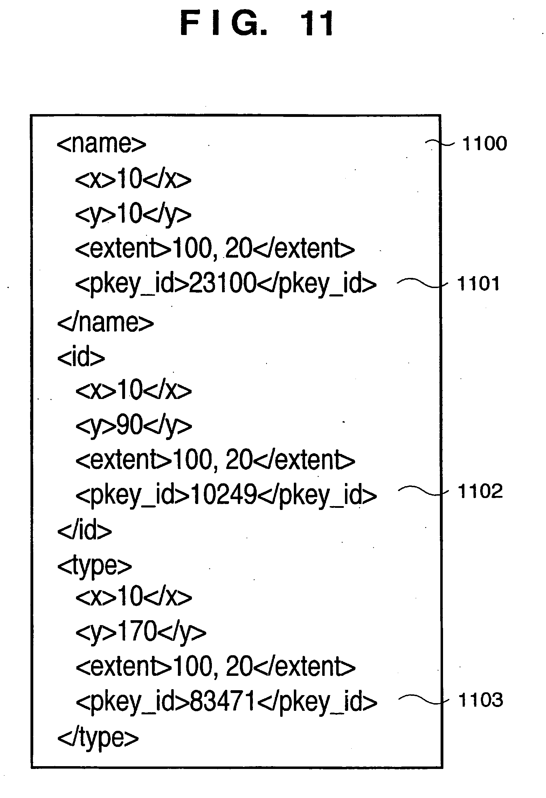

Fig. 11 shows an example of data obtained by decoding a background copy-forgery-inhibited pattern embedded in an original image. A difference from the case shown in Fig. 5 is that the data between tags <pkey> and </pkey> is not public key information itself but is a code (public key identification code) which designates public key information. Public key identification codes 1101, 1102, and 1103 in Fig. 11 means codes which designate public keys to be used from the public keys stored in a specific place. The specific place in this case is another storage medium existing on a ROM 202 or HD 210 in the multi-function peripheral device (MFP) or on a network 214. Alternatively, such a place may be determined by using a directory service such as an LDAP server. Using this embodiment makes it possible to always use a latest public key.

Although the embodiments of the present invention have been described above, the multi-function peripheral device according to each embodiment can be implemented by a PC having a scanner and printer and an application executed on the PC. It is therefore the case that the present invention can comprise a computer program. In addition, a computer program is generally stored in a computer-readable storage medium such as a CD-ROM, and can be executed by being set in a computer and being copied or installed to or in a system. Therefore, the present invention incorporates such a computer-readable storage medium.

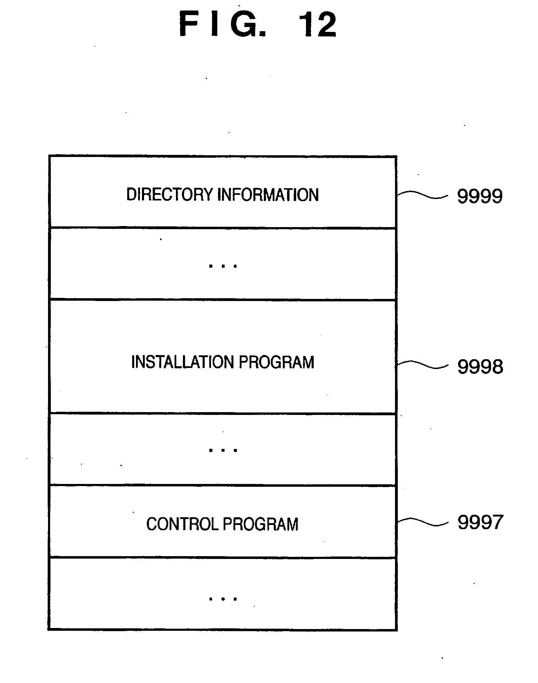

Fig. 12 is a view showing the memory map of a CD-ROM as an example of a storage medium. Referring to Fig. 12, reference numeral 9999 denotes an area in which directly information is stored, which indicates the positions of an area 9998 in which an installation program is stored and an area 9997 in which a control program for a printing client or network printer is stored. In the area 9998, the installation program is stored. In the area 9997, the control program for the multi-function peripheral device 102 is stored.

When the control program for the multi-function peripheral device is to be installed in the copying machine or an equivalent PC system, installation is executed by causing the CPU 201 to execute the installation program stored in the area 9998. As a consequence, the CPU 201 reads out the control program for the printing client or network printer from the area 9997 in which device control programs are stored, and rewrites the contents of the ROM 202 or installs the program in the large-size storage device 210. In this case, the ROM 202 needs to be a rewritable ROM such as a flash ROM instead of a simple mask ROM.

As has been described above, according to the present invention, an original on a paper basis on which confidential information is written and can be output upon being converted into a form that allows only a specific person or terminal to read the written contents.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An image processing apparatus (102) for generating an output image from an original image read by image reading means, **characterized by** comprising:
storage means (203) for storing image data obtained when an original is read by the image reading means in accordance with a predetermined instruction input;
extraction means (S302) for extracting, from the image data stored in said storage means, area information which defines an item field in the image data and encryption key specifying information which specifies an encryption key to be used when image data in the item field is to be encrypted;
encryption means (S303) for encrypting image data in said item field of the image data using the encryption key specified by said encryption key specifying information;
updating means (S303) for updating the item field of the stored image data with image data encrypted by said encryption means ; and
output means (S304) for outputting the image data updated by said updating means.

2. The image processing apparatus according to claim 1, **characterized in that** said output means outputs to a predetermined printing means.

3. The image processing apparatus according to claim 1, **characterized in that** said output means outputs to predetermined communication means.

4. The image processing apparatus according to any preceding claim, **characterized in that** said extraction means extracts the area information and the encryption key specifying information from a background area of image data.

5. The image processing apparatus according to any preceding claim, **characterized in that** said encryption means comprises hybrid encryption means for encrypting the image data in the area by using a random number generated by predetermined random number generation means as a common key, and encrypting the generated random number by using the encryption key as a public key.

6. The image processing apparatus according to any preceding claim, wherein the encryption key specifying information comprises information of a public key.

7. The image processing apparatus according to any one of claims 1 to 5, **characterized in that** the encryption key specifying information comprises information for specifying a public key stored in an external storage device.

8. A control method for an image processing apparatus which generates an output image from an original image read by image reading means,
**characterized in that** the method comprises:
storing, in predetermined storage means, image data obtained when an original is read by image reading means in accordance with a predetermined instruction input;
extracting, from the image data stored in the storage means, area information which defines an item field in the image data and encryption key specifying information which specifies an encryption key to be used when image data in the item field is to be encrypted;
encrypting image data in said item field of the image data using the encryption key specified by said encryption key specifying information;
updating the corresponding item field of the stored image data with image data encrypted in the encryption step ; and
outputting the image data updated in the updating step.

9. A computer program which when loaded into a computer and executed performs a method comprising:
storing, in predetermined storage means, image data obtained when an original is read by image reading means in accordance with a predetermined instruction input;
extracting, from the image data stored in the storage means, area information which defines an item field in the image data and encryption key specifying information which specifies an encryption key to be used when image data in the item field is to be encrypted;
encrypting image data in said item field of the image data using the encryption key specified by said encryption key specifying information;
updating the corresponding item field of the stored image data with image data encrypted in the encryption step; and
outputting the image data updated in the updating step.

10. A computer-readable storage medium **characterized by** storing a computer program as claimed in claim 9.

## Patentansprüche

1. Bildverarbeitungsvorrichtung (102) zur Erzeugung eines Ausgabebildes aus einem von einer Bildleseeinrichtung gelesenem Originalbild, **gekennzeichnet durch**:
eine Speichereinrichtung (203) zur Speicherung von Bilddaten, die beim Lesen eines Originales **durch** die Bildleseeinrichtung gemäß einer eingegeben vorbestimmten Anweisung erlangt werden;
eine Extraktionseinrichtung (S302) zur Extraktion, aus den in der Speichereinrichtung gespeicherten Bilddaten, von Bereichsinformationen, die ein Elementfeld in den Bilddaten definieren, und von Verschlüsselungsschlüsselspezifizierungsinformationen, die einen Verschlüsselungsschlüssel spezifizieren, der zu verwenden ist, wenn Bilddaten in dem Elementfeld zu verschlüsseln sind;
eine Verschlüsselungseinrichtung (S303) zur Verschlüsselung von Bilddaten in dem Elementfeld der Bilddaten unter Verwendung des **durch** die Verschlüsselungsschlüsselspezifizierungsinformationen spezifizierten Verschlüsselungsschlüssels;
eine Aktualisierungseinrichtung (S303) zur Aktualisierung des Elementfeldes der gespeicherten Bilddaten mit **durch** die Verschlüsselungseinrichtung verschlüsselten Bilddaten; und
eine Ausgabeeinrichtung (S304) zur Ausgabe der **durch** die Aktualisierungseinrichtung aktualisierten Bilddaten.

2. Bildverarbeitungsvorrichtung gemäß Anspruch 1, **dadurch gekennzeichnet, dass** die Ausgabeeinrichtung an eine vorbestimmte Druckeinrichtung ausgibt.

3. Bildverarbeitungsvorrichtung gemäß Anspruch 1, **dadurch gekennzeichnet, dass** die Ausgabeeinrichtung an eine vorbestimmte Kommunikationseinrichtung ausgibt.

4. Bildverarbeitungsvorrichtung gemäß einem der vorstehenden Ansprüche, **dadurch gekennzeichnet, dass** die Extraktionseinrichtung die Bereichsinformationen und die Verschlüsselungsschlüsselspezifizierungsinformationen aus einem Hintergrundbereich von Bilddaten extrahiert.

5. Bildverarbeitungsvorrichtung gemäß einem der vorstehenden Ansprüche, **dadurch gekennzeichnet, dass** die Verschlüsselungseinrichtung eine Hybrid-Verschlüsselungseinrichtung umfasst, zur Verschlüsselung der Bilddaten in dem Bereich unter Verwendung einer von einer vorbestimmten Zufallszahlerzeugungseinrichtung erzeugten Zufallszahl als ein gemeinsamer Schlüssel, und zur Verschlüsselung der erzeugten Zufallszahl unter Verwendung des Verschlüsselungsschlüssels als ein öffentlicher Schlüssel.

6. Bildverarbeitungsvorrichtung gemäß einem der vorstehenden Ansprüche, wobei die Verschlüsselungsschlüsselspezifizierungsinformationen Informationen eines öffentlichen Schlüssels umfassen.

7. Bildverarbeitungsvorrichtung gemäß einem der Ansprüche 1 bis 5, **dadurch gekennzeichnet, dass** die Verschlüsselungsschlüsselspezifizierungsinformationen Informationen zum Spezifizieren eines in einem externen Speicher gespeicherten öffentlichen Schlüssels umfassen.

8. Steuerverfahren für eine Bildverarbeitungsvorrichtung, die ein Ausgabebildes aus einem von einer Bildleseeinrichtung gelesenem Originalbild erzeugt, **gekennzeichnet durch** die Schritte:
Speichern in einer vorbestimmten Speichereinrichtung von Bilddaten, die beim Lesen eines Originales **durch** die Bildleseeinrichtung gemäß einer eingegeben vorbestimmten Anweisung erlangt werden;
Extrahieren, aus den in der Speichereinrichtung gespeicherten Bilddaten, von Bereichsinformationen, die ein Elementfeld in den Bilddaten definieren, und von Verschlüsselungsschlüsselspezifizierungsinformationen, die einen Verschlüsselungsschlüssel spezifizieren, der zu verwenden ist, wenn Bilddaten in dem Elementfeld zu verschlüsseln sind;
Verschlüsseln von Bilddaten in dem Elementfeld der Bilddaten unter Verwendung des **durch** die Verschlüsselungsschlüsselspezifizierungsinformationen spezifizierten Verschlüsselungsschlüssels;
Aktualisieren des entsprechenden Elementfeldes der gespeicherten Bilddaten mit in dem Verschlüsselungsschritt verschlüsselten Bilddaten; und
Ausgeben der in dem Aktualisierungsschritt aktualisierten Bilddaten.

9. Computerprogramm, das, wenn es in einen Computer geladen und ausgeführt wird, ein Verfahren durchführt, mit den Schritten:
Speichern in einer vorbestimmten Speichereinrichtung von Bilddaten, die beim Lesen eines Originales durch die Bildleseeinrichtung gemäß einer eingegeben vorbestimmten Anweisung erlangt werden;
Extrahieren, aus den in der Speichereinrichtung gespeicherten Bilddaten, von Bereichsinformationen, die ein Elementfeld in den Bilddaten definieren, und von Verschlüsselungsschlüsselspezifizierungsinformationen, die einen Verschlüsselungsschlüssel spezifizieren, der zu verwenden ist, wenn Bilddaten in dem Elementfeld zu verschlüsseln sind;
Verschlüsseln von Bilddaten in dem Elementfeld der Bilddaten unter Verwendung des durch die Verschlüsselungsschlüsselspezifizierungsinformationen spezifizierten Verschlüsselungsschlüssels;
Aktualisieren des entsprechenden Elementfeldes der gespeicherten Bilddaten mit in dem Verschlüsselungsschritt verschlüsselten Bilddaten; und
Ausgeben der in dem Aktualisierungsschritt aktualisierten Bilddaten.

10. Computerlesbares Speichermedium, **dadurch gekennzeichnet, dass** darauf ein Computerprogramm gemäß Anspruch 9 gespeichert ist.

## Revendications

1. Appareil (102) de traitement d'image destiné à générer une image de sortie à partir d'une image originale lue par un moyen de lecture d'image, **caractérisé en ce qu'**il comporte :
un moyen de stockage (203) destiné à stocker des données d'image obtenues lorsqu'un original est lu par le moyen de lecture d'image conformément à l'entrée d'une instruction prédéterminée ;
un moyen d'extraction (S302) destiné à extraire, des données d'image stockées dans ledit moyen de stockage, une information de zone qui définit un champ d'élément dans les données d'image et une information de spécification de clé de cryptage qui spécifie une clé de cryptage devant être utilisée lorsque des données d'image se trouvant dans le champ d'élément doivent être cryptées ;
un moyen de cryptage (S303) destiné à crypter des données d'image se trouvant dans ledit champ d'élément des données d'image en utilisant la clé de cryptage spécifiée par ladite information de spécification de clé de cryptage ;
un moyen de mise à jour (S303) destiné à mettre à jour le champ d'élément des données d'image stockées avec des données d'image cryptées par ledit moyen de cryptage ; et
un moyen de sortie (S304) destiné à délivrer en sortie les données d'image mises à jour par ledit moyen de mise à jour.

2. Appareil de traitement d'image selon la revendication 1, **caractérisé en ce que** ledit moyen de sortie envoie en sortie à un moyen d'impression prédéterminé.

3. Appareil de traitement d'image selon la revendication 1, **caractérisé en ce que** ledit moyen de sortie envoie en sortie à un moyen de communication prédéterminé.

4. Appareil de traitement d'image selon l'une quelconque des revendications précédentes, **caractérisé en ce que** ledit moyen d'extraction extrait l'information de zone et l'information de spécification de clé de cryptage depuis une zone de fond des données d'image.

5. Appareil de traitement d'image selon l'une quelconque des revendications précédentes, **caractérisé en ce que** ledit moyen de cryptage comprend un moyen de cryptage hybride destiné à crypter les données d'image situées dans la zone en utilisant un nombre aléatoire généré par un moyen prédéterminé de génération de nombre aléatoire en tant que clé commune, et à crypter le nombre aléatoire généré en utilisant la clé de cryptage en tant que clé publique.

6. Appareil de traitement d'image selon l'une quelconque des revendications précédentes, dans lequel l'information de spécification de clé de cryptage comprend une information d'une clé publique.

7. Appareil de traitement d'image selon l'une quelconque des revendications 1 à 5, **caractérisé en ce que** l'information de spécification de clé de cryptage comprend une information pour spécifier une clé publique stockée dans un dispositif de stockage externe.

8. Procédé de commande d'un appareil de traitement d'image qui génère une image de sortie à partir d'une image originale lue par un moyen de lecture d'image,
le procédé étant **caractérisé en ce qu'**il comprend :
le stockage, dans un moyen de stockage prédéterminé, de données d'image obtenues lorsqu'un original est lu par un moyen de lecture d'image conformément à l'entrée d'une instruction prédéterminée ;
l'extraction, à partir des données d'image stockées dans le moyen de stockage, d'une information de zone qui définit un champ d'élément dans les données d'image et d'une information de spécification de clé de cryptage qui spécifie une clé de cryptage devant être utilisée lorsque des données d'image se trouvant dans le champ d'élément doivent être cryptées ;
le cryptage de données d'image situées dans ledit champ d'élément des données d'image en utilisant la clé de cryptage spécifiée par ladite information de spécification de clé de cryptage ;
la mise à jour du champ d'élément correspondant des données d'image stockées avec des données d'image cryptées dans l'étape de cryptage ; et
la délivrance en sortie des données d'image mises à jour dans l'étape de mise à jour.

9. Programme d'ordinateur qui, lorsqu'il est chargé dans un ordinateur et exécuté, met en oeuvre un procédé comprenant :
le stockage, dans un moyen de stockage prédéterminé, de données d'image obtenues lorsqu'un original est lu par un moyen de lecture d'image conformément à l'entrée d'une instruction prédéterminée ;
l'extraction, à partir des données d'image stockées dans le moyen de stockage, d'une information de zone qui définit un champ d'élément dans les données d'image et d'une information de spécification de clé de cryptage qui spécifie une clé de cryptage devant être utilisée lorsque des données d'image se trouvant dans le champ d'élément doivent être cryptées ;
le cryptage de données d'image situées dans ledit champ d'élément des données d'image en utilisant la clé de cryptage spécifiée par ladite information de spécification de clé de cryptage ;
la mise à jour du champ d'élément correspondant des données d'image stockées avec des données d'image cryptées dans l'étape de cryptage ; et
la délivrance en sortie des données d'image mises à jour dans l'étape de mise à jour.

10. Support de stockage lisible par ordinateur, **caractérisé par** le stockage d'un programme d'ordinateur selon la revendication 9.
